# EUROPEAN PATENT APPLICATION

(11) **EP 4 819 497 A1**
(43) Date of publication of application: **07.10.2026**
(21) Application number: 26169502.7
(22) Date of filing: 31.03.2026
(51) Int. Cl.: H04B 1/04, H04B 1/48, H04B 1/18

(54) **INTEGRATED RADIO FREQUENCY SWITCHING CIRCUIT WITH A SINGLE-POLE-MULTI-THROW SWITCH**

(30) Priority: 02.04.2025 US 202519098365
(71) Applicant: Synaptics Incorporated, San Jose, CA 95131 (US)
(72) Inventor: CHIEN, Jui-Te, San Jose, 95131 (US); CHIU, Wei-Chien, San Jose, 95131 (US)
(74) Representative: J A Kemp LLP

(57) **Abstract**

An integrated radio frequency switching circuit includes a radio frequency (RF) input/output (RFIO) that is configured to be operatively coupled to multiple RF paths. A Wireless Local Area Network (WLAN) transmission path includes a power amplifier and a WLAN power amplifier matching network circuit that are operatively coupled to the RFIO without a switch. An inductor in the WLAN power amplifier matching network is shunted to ground for electrostatic discharge (ESD) protection of the RFIO in all operational modes. A Personal Area Network (PAN) transmission path includes two power amplifiers with different power levels that are both operatively coupled to the RFIO through a series switch. A WLAN/PAN signal reception path includes a low noise amplifier (LNA) and an LNA matching network that are coupled to the RFIO. The series switch and a LNA matching network are controlled to enable multiple transmission and reception operational modes.

## Description

### TECHNICAL FIELD

The present embodiments relate generally to a radio frequency (RF) communications, and more specifically to a RF switches used for transmission and reception of RF signals.

### BACKGROUND OF RELATED ART

Radio frequency (RF) communications are essential to modern wireless technologies, enabling a wide array of applications, including cellular networks (e.g., 4G, 5G), Wi-Fi, Bluetooth, satellite systems, and radar. Wireless communications systems rely on the efficient transmission and reception of electromagnetic signals across a wide range of frequencies, power levels, and protocols. For example, wireless communications systems are expected to provide multiple different services, such as access to cellular networks, Wireless Local Area Networks (WLANs) such as Wi-Fi, and Personal Area Networks (PANs) such as Bluetooth, within a single platform.

The increasing demand for high data rates, low latency, and multi-band operation has driven the complexity of RF systems, requiring sophisticated front end architectures to manage RF paths between antennas, amplifiers, filters, and transceivers. Central to RF front end architectures are switching circuits, which direct and control the RF signals. RF switches enable functionalities, such as antenna multiplexing, band selection, and transmit/receive (T/R) isolation, allowing a single device to provide communication systems.

Existing RF switching solutions face challenges, including trade-offs between insertion loss, isolation, switching speed, and power handling. Innovations in RF switch design and integration are thus important to advance the performance, efficiency, and scalability of RF communication systems, addressing the evolving needs of next-generation wireless technologies.

### SUMMARY

This Summary is provided to introduce in a simplified form a selection of concepts that are further described below in the Detailed Description. This Summary is not intended to identify key features or essential features of the claimed subject matter, nor is it intended to limit the scope of the claimed subject matter.

One innovative aspect of the subject matter of this disclosure can be implemented in an integrated radio frequency switching circuit. The integrated radio frequency switching circuit includes a radio frequency input/output (RFIO) node, a first power amplifier for transmitting a Personal Area Network (PAN) signal at a first power level, and a second power amplifier for transmitting the PAN signal at a second power level, wherein both the first power amplifier and the second power amplifier are operatively coupled to the RFIO node through a first switch. Additionally, the integrated radio frequency switching circuit includes a third power amplifier for transmitting a Wireless Local Area Network (WLAN) signal and a WLAN power amplifier matching network circuit operatively coupled to the RFIO node without a switch. The WLAN power amplifier matching network circuit includes a first inductor that is coupled to the RFIO node and is shunted to ground for electrostatic discharge (ESD) protection of the RFIO node. The integrated radio frequency switching circuit further includes a low noise amplifier for receiving a WLAN signal and a PAN signal operatively coupled to the RFIO node.

Another innovative aspect of the subject matter of this disclosure can be implemented in a method of sharing a radio frequency input/output (RFIO) node in an integrated radio frequency switching circuit. The method includes operatively coupling a first power amplifier to the RFIO node through a first switch and transmitting a Personal Area Network (PAN) signal at a first power level during a first PAN transmission operational mode and operatively coupling a second power amplifier to the RFIO node through the first switch and transmitting the PAN signal at a second power level during a second PAN transmission operational mode. The method further includes operatively coupling a third power amplifier and a power amplifier matching network circuit to the RFIO node without a switch and transmitting a Wireless Local Area Network (WLAN) signal during a WLAN transmission operational mode. The power amplifier matching network circuit includes a first inductor that is coupled to the RFIO node and is shunted to ground for electrostatic discharge (ESD) protection of the RFIO node during all operational modes. The method further includes operatively coupling a low noise amplifier to the RFIO node without a switch and receiving a WLAN signal or a PAN signal during a WLAN/PAN receive operational mode.

Another innovative aspect of the subject matter of this disclosure can be implemented in an integrated radio frequency switching circuit that includes a radio frequency input/output (RFIO) node that is configured to be operatively coupled to a first Personal Area Network (PAN) transmission path, a second PAN transmission path, a Wireless Local Area Network (WLAN) transmission path, and a WLAN and PAN reception path. The integrated radio frequency switching circuit includes a first power amplifier for transmitting a PAN signal at a first power level along the first PAN transmission path during a first PAN transmission operational mode and a second power amplifier for transmitting the PAN signal at a second power level along the second PAN transmission path during a second PAN transmission operational mode. A first switch is coupled between both the first power amplifier and the second power amplifier and the RFIO node and is controlled to operatively couple both the first power amplifier and the second power amplifier to the RFIO node during the first PAN transmission operational mode and the second PAN transmission operational mode. The integrated radio frequency switching circuit further includes a third power amplifier for transmitting a Wireless Local Area Network (WLAN) signal along the WLAN transmission path during a WLAN transmission operational mode and a WLAN power amplifier matching network circuit coupled between the third power amplifier and the RFIO node along the WLAN transmission path. The third power amplifier and WLAN power amplifier matching network circuit are operatively coupled to the RFIO node without a switch. The WLAN power amplifier matching network circuit includes a first inductor that is coupled to the RFIO node and is shunted to ground for electrostatic discharge (ESD) protection of the RFIO node during all operational modes. The integrated radio frequency switching circuit further includes a low noise amplifier operatively coupled to the RFIO node for receiving a WLAN signal or a PAN signal along the WLAN and PAN reception path during a WLAN/PAN receive operational mode.

### BRIEF DESCRIPTION OF THE DRAWINGS

The exemplary embodiments are illustrated by way of example and are not intended to be limited by the figures of the accompanying drawings. Like numbers reference like elements throughout the drawings and specification.
FIG. 1 shows a block diagram of an example of radio frequency (RF) front end architecture.
FIG. 2 shows a block diagram of an RF front end architecture that includes a front end module with integrated transmit/receive switches.
FIG. 3A shows a schematic diagram of an RF single-pole-multi-throw transmit/receive switch that connects four RF paths to one Radio Frequency Input/Output (RFIO) node of a front end module, according to some implementations.
FIGs. 3B, 3C, and 3D show schematic diagrams of the RF single-pole-multi-throw transmit/receive switch in different operational modes, according to some implementations.
FIG. 4 is a flowchart illustrating one example of a method of sharing a RFIO node in an integrated radio frequency switching circuit, according to some implementations.

### DETAILED DESCRIPTION

In the following description, numerous specific details are set forth such as examples of specific components, circuits, and processes to provide a thorough understanding of the present disclosure. The term "coupled" as used herein means coupled directly to or coupled through one or more intervening components or circuits. Also, in the following description and for purposes of explanation, specific nomenclature and/or details are set forth to provide a thorough understanding of the exemplary embodiments. However, it will be apparent to one skilled in the art that these specific details may not be required to practice the exemplary embodiments. In other instances, well-known circuits and devices are shown in block diagram form to avoid obscuring the present disclosure. Any of the signals provided over various buses described herein may be time-multiplexed with other signals and provided over one or more common buses. Additionally, the interconnection between circuit elements or software blocks may be shown as buses or as single signal lines. Each of the buses may alternatively be a single signal line, and each of the single signal lines may alternatively be buses, and a single line or bus might represent any one or more of a myriad of physical or logical mechanisms for communication between components. The exemplary embodiments are not to be construed as limited to specific examples described herein but rather to include within their scope all embodiments defined by the appended claims.

As discussed herein, radio frequency (RF) switches are used to direct and control RF signals for transmission and reception within front end architectures. Systems that include a large number of RF paths may require multiple RF switches that are combined to accommodate the number of RF paths. The use of multiple RF switches, however, increases cost and may require the use of several Radio Frequency Input/Output (RFIO) nodes in the front end module. RF switches typically include a series switch in the RF transmission path which decreases the efficiency of the power amplifier resulting in losses during transmission mode. Additionally, the RFIO needs to be protected from electrostatic discharge (ESD) events, which is difficult without impacting RF performance.

Implementations of the subject matter described herein includes an integrated RF switching circuit that provides multiple, e.g., four, RF paths to the RFIO node, while minimizing switch losses and simplifying ESD design. As discussed herein, the switching circuit includes a Wireless Local Area Network (WLAN) transmission path that is operatively coupled to the RFIO node without a series switch to avoid loss during WLAN transmission. The WLAN transmission path includes a WLAN power amplifier and a WLAN power amplifier matching network with an inductor that is shunted to ground for ESD protection of the RFIO node in all operational modes. High power and low power Personal Area Network (PAN) transmission paths include power amplifiers operating at different power levels that are both coupled to the RFIO node through a series switch that operatively couples the PAN transmission paths to the RIO node during PAN transmission and otherwise isolates the PAN transmission paths. Additionally, a reception path for WLAN and PAN signals includes a low noise amplifier that is coupled to the RFIO node. The RFIO node may be coupled to a shunt capacitor array in a low noise amplifier matching network, where the shunt capacitor array includes a variable capacitor that is tuned for different operational modes of the RFIO node. A switch in the low noise amplifier matching network may additionally be controlled to protect the low noise amplifier during transmission operational modes and for input matching during the reception operational mode.

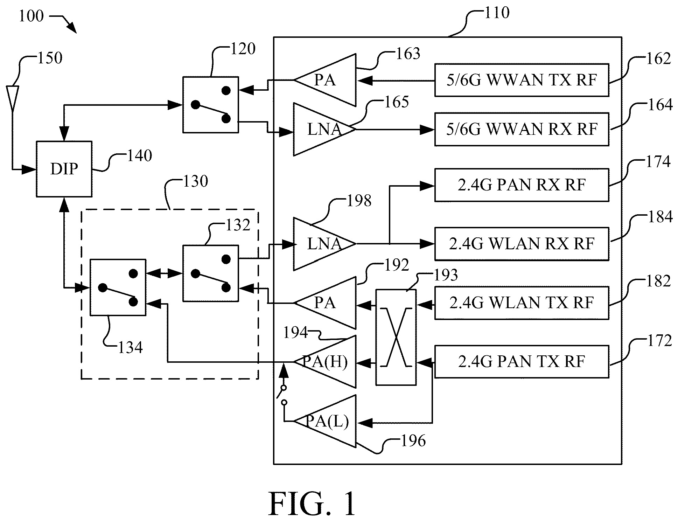

FIG. 1 shows a block diagram of a radio frequency (RF) front end architecture 100. The RF front end architecture 100 is illustrated with a front end module 110, external transmit/receive switch circuits 120 and 130, a diplexer 140 and an antenna 150.

The front end module 110 is illustrated as including a plurality of Radio Frequency (RF) Application Specific Integrated Circuits (ASICs) that are coupled to amplifier circuits. The RF ASICs may be configured to implement the mixer circuits, oscillators, and input/output filters to generate the complex baseband signals from a received RF signal via antennas 150 and to generate the RF signal for transmission on the antennas 150 from a complex baseband signal. As illustrated, the front end module 110 may include RF ASICs 162 and 164 for transmission and reception, respectively, of Wireless Wide Area Network (WWAN) RF signals, e.g., for the fifth generation (5G) or sixth generation (6G) New Radio (NR) standard, which are coupled to a power amplifier (PA) 163 and a low noise amplifier (LNA) 165, respectively. The power amplifier 163 and LNA 165 for WWAN RF signals are connected to the antenna 150 through the external transmit/receive switch circuit 120 and diplexer 140.

The front end module 110 may additionally include RF ASICs for Wireless Local Area Network (WLAN) signals, e.g., based on the IEEE 802.11 standards (including IEEE 802.11ax), commonly referred to as WiFi, or other protocols, and for Personal Area Network (PAN) signals, e.g., based on Bluetooth^{®}, Zigbee, Ultra-Wideband (UWB), Near Field Communication (NFC), etc. For example, as illustrated, the front end module 110 may include RF ASICs 172 and 174 for transmission and reception, respectively, of PAN RF signals, e.g., Bluetooth RF signals at 2.4 GHz, and may additionally include RF ASICs 182 and 184 for transmission and reception, respectively, of WLAN RF signals, e.g., WiFi RF signals at 2.4 GHz, although other frequencies and protocols may be used. The transmission RF ASICs 172 and 182 for PAN signals and WLAN signals, respectively, are both coupled to power amplifiers 192 and 194, e.g., through a switch 193, and the RF ASIC 172 for PAN signals is further coupled to power amplifier 196. The power amplifier 194 and power amplifier 196, for example, may be used for selectively transmitting PAN signals with relatively high power (H) or low power (L), respectively. The reception RF ASICs 174 and 184 for PAN signals and WLAN signals, respectively, are both coupled to receive signals via the LNA 198.

The power amplifiers 192, 194, and 196, and LNA 198 are connected to the antenna 150 through the external transmit/receive switch circuit 130 and diplexer 140. The external transmit/receive switch circuit 130 includes two single pole double throw (SP2T) switches 132 and 134 that are connected to the front end module 110 through three Radio Frequency Input/Output (RFIO) pins or nodes. The first SP2T switch 132 is connected to the power amplifier 192 and LNA 198 through two separate RFIO pins. The second SP2T switch 134 is connected to the power amplifiers 194 and 196 through a single RFIO pin, and is further connected to the first SP2T switch 132 and the diplexer 140.

As can be seen, the use of the external transmit/receive switch circuit 130 for the WLAN and PAN signals, uses two separate SP2T switches, which increases costs. Further the front end module 110 requires three RFIO nodes to communicate with the external transmit/receive switch circuit 130.

In some front end modules, an RF single-pole-double-throw transmit/receive switch may connect a single RFIO node to both a power amplifier and a low noise amplifier, e.g., power amplifier 192 and low noise amplifier shown 198 in FIG. 1 through matching network circuits and series switches. The use of a series switch between the power amplifier and the RFIO node, however, decreases the efficiency of the power amplifier, resulting in losses while in transmission mode.

Additionally, the RFIO node must be connected to an electrostatic discharge (ESD) circuit to dissipate or shunt energy of a discharge or withstand current and voltage levels. In typical cases, the ESD circuit for an RFIO node needs to pass Human Body Model (HBM) 2KV and Charged-Device Model (CDM) 500V. In general, the Direct Current (DC) path, for example, should be less than 2 Ohms to sustain 2KV HBM ESD. Implementation of the ESD circuit, however, is difficult if the output power at the RFIO node is high, such as with transmission of a WLAN signal, which may have an output peak voltage Vp > 7V. In some implementations, for example, the ESD circuit may include a diode shunt, but this impacts the RF performance, particularly with transmission high output power mode. For example, cascode may be used in several stages resulting in high output voltage swings during transmission. During transmission, e.g. for WLAN signals, the RFIO node must withstand a high signal voltage swing and needs lower parasitic capacitance. If an ESD diode device is designed to withstand higher signal voltage swings, it will produce higher parasitic capacitance. Accordingly, the use of an ESD diode device in the ESD circuit for transmission will degrade the RF performance.

Moreover, the use of a single-pole-double-throw switch in the front end module, is inadequate if more than two RF paths are desired, such as WLAN transmit, WLAN receive, PAN transmit, and PAN receive.

Accordingly, an integrated single-pole-multi-throw transmit/receive RF switch is desirable to accommodate more than two RF paths using only a single RFIO node.

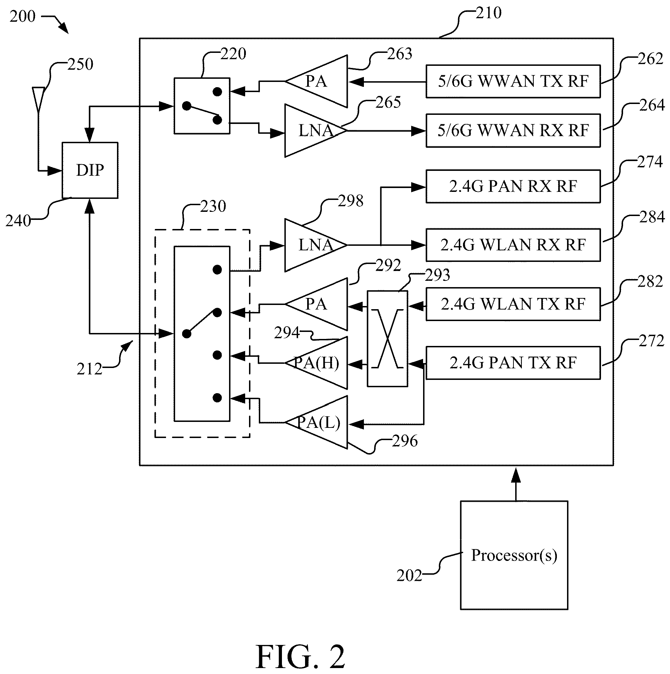

FIG. 2 shows a block diagram of a radio frequency (RF) front end architecture 200 that includes a front end module 210 with integrated transmit/receive switches 220 and 230 that are connected to a diplexer 240 and antenna 250. The integrated transmit/receive switch 230 is a single-pole-multi-throw transmit/receive switch 230 that is connected to the antenna 250 through a single RFIO node, according to implementations discussed herein. The front end module 210 may be coupled to one or more processor(s) 202 that are configured to control the operation of the front end module 210, including the various operational modes of the transmit/receive switch 230 as discussed herein.

Similar to the front end module 110, illustrated in FIG. 1, the front end module 210 includes a plurality of RF ASICs. In some implementations, the front end module 210 may include RF ASICs 262 and 264 for transmission and reception, respectively, of WWAN RF signals, e.g., for 5G or 6G NR standard, which are coupled to a power amplifier 263 and a low noise amplifier 265, respectively. The power amplifier 263 and low noise amplifier 265 are connected to the antenna 250 through an integrated single-pole-double-throw switch 220 and the diplexer 240. It should be understood that, in some implementations, the front end module 210 may not include RF ASICs 262 or 264, or may include additional or other types of RF ASICs that are connected to antenna 250 in a similar manner as RF ASICs 262 or 264.

Additionally, the front end module 210 may include RF ASICs 272 and 282 for the transmission of PAN signals and WLAN signals, respectively, similar to RF ASICs 172 and 182 in the front end module 110, illustrated in FIG. 1, and may include RF ASICs 274 and 284 for the reception of PAN signals and WLAN signals, respectively, similar to RF ASICs 174 and 184 in the front end module 110. The transmission RF ASICs 272 and 282 for PAN signals and WLAN signals, respectively, are both coupled to power amplifiers 292 and 294, e.g., through a switch 293, and the RF ASIC 272 for PAN signals is further coupled to power amplifier 296. The power amplifier 294 and power amplifier 296, for example, may be used for selectively transmitting PAN signals with relatively high power (H) or low power (L), respectively. The reception RF ASICs 274 and 284 for PAN signals and WLAN signals, respectively, are both coupled to receive signals via the LNA 298.

The power amplifiers 292, 294, and 296, and LNA 298 are all connected to the integrated single-pole-multi-throw transmit/receive switch 230, which is connected to the antenna 250 through a single RFIO node 212 of the front end module 210. Thus, the integrated transmit/receive switch 230 includes only a single switch, as opposed to two as used in FIG. 1, and requires only a single RFIO node, as opposed to three as used in FIG. 1.

In addition to sharing more than two RF paths using only a single RFIO node, as discussed above, the RF switch should minimize switch loss in the most critical path of the WLAN transmit power amplifier, e.g., by having no series switch between the WLAN transmit power amplifier and the RFIO node. Additionally, the RF switch should simplify the ESD design for protection of the RFIO node.

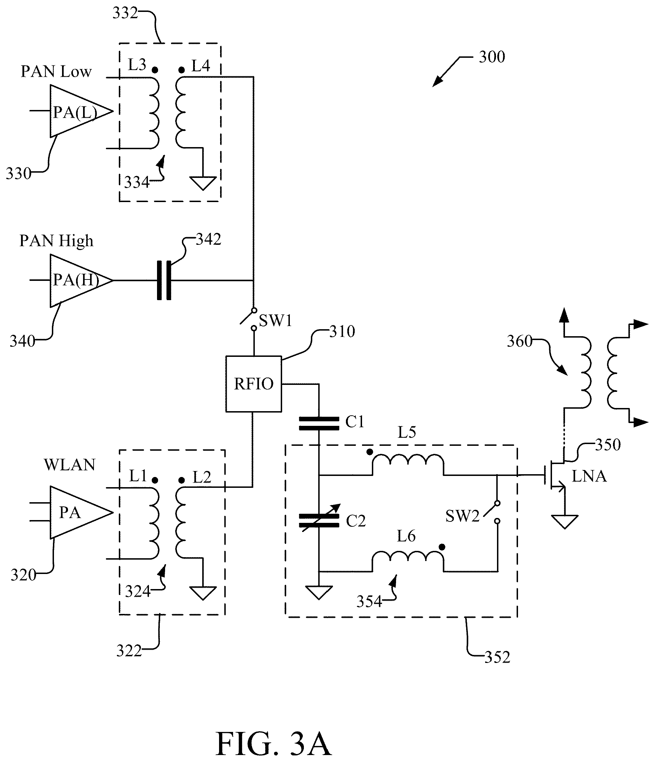

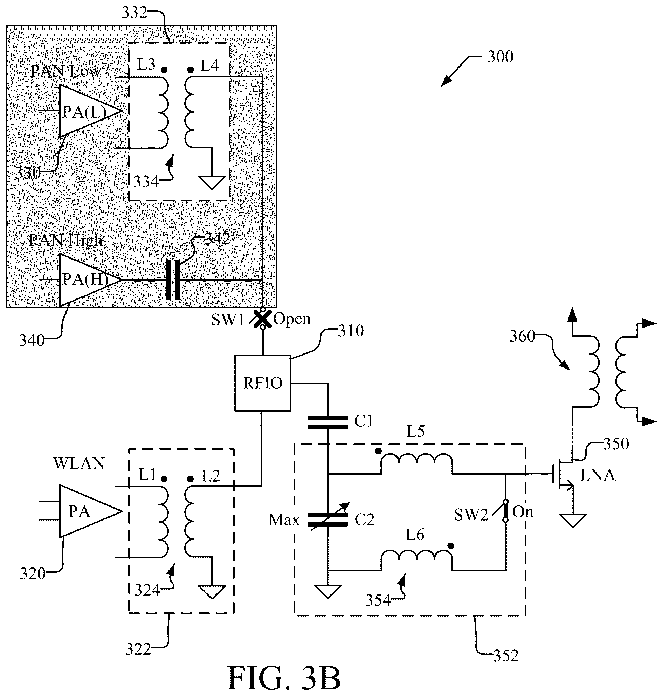

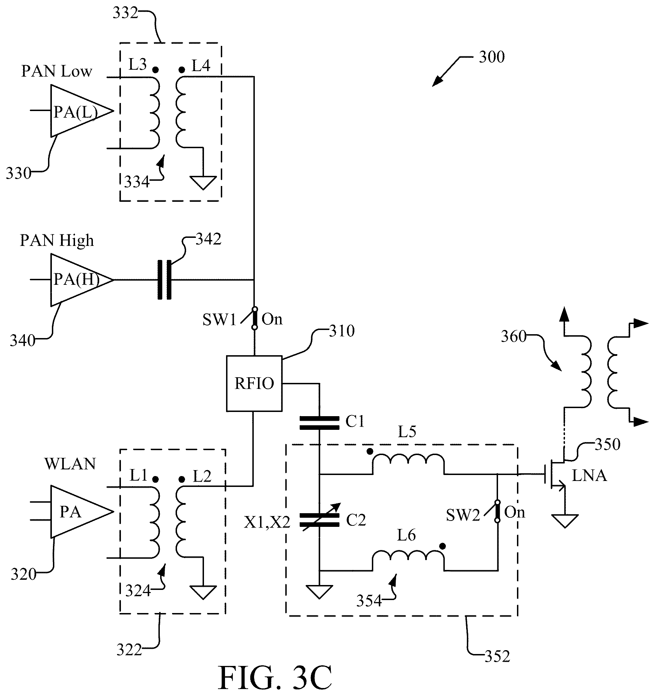

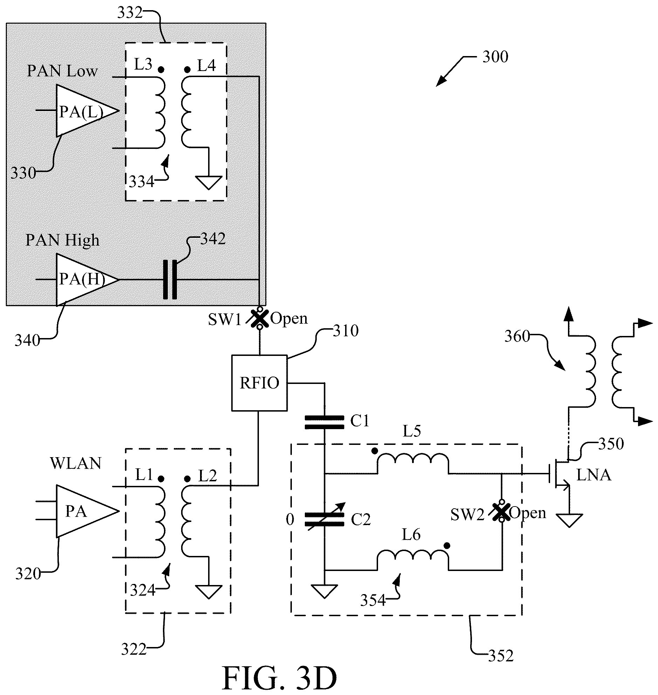

FIG. 3A shows schematic diagrams of an RF single-pole-multi-throw transmit/receive switch 300 that connects four RF paths to one RFIO node 310 of a front end module, according to some implementations. For example, the four RF paths connected to the RFIO node 310 may include a WLAN transmission path, a PAN high power transmission path, a PAN low power transmission path, and a WLAN/PAN reception path. FIGs. 3B, 3C, and 3D illustrates the switch in various operational modes including WLAN transmission mode, high power and low power PAN transmission modes, and WLAN/PAN reception mode, respectively.

As illustrated, the switch 300 includes a first power amplifier 320 that is connected to the RFIO node 310 through a power amplifier matching network circuit 322. The first power amplifier 320 has the highest output power of all of the RF paths connected to the RFIO node 310. For example, the first power amplifier 320 may be used for WLAN signals, and is sometimes referred to herein as a WLAN power amplifier 320. In order to minimize losses, the WLAN power amplifier 320 is connected to the RFIO node 310 without a series switch, e.g., the WLAN power amplifier 320 with WLAN power amplifier matching network circuit 322 are connected directly to the RFIO node 310 without an intervening series switch.

The WLAN power amplifier matching network circuit 322 includes a transformer 324 with inductors L1 and L2, with the secondary inductor L2 connected to the RFIO node 310 and shunted to ground. The inductor L2 in the WLAN power amplifier matching network circuit 322 serves as the ESD circuit for the RFIO node 310 in all operational modes of the switch 300, e.g., during WLAN transmission, a PAN high power transmission, a PAN low power transmission, and a WLAN/PAN reception.

The switch 300 includes a second power amplifier 330 and a third power amplifier 340 that are both connected to the RFIO node 310 through a series switch SW1, such as a MOSFET. The series switch SW1 may be closed during transmission of PAN signals via the second power amplifier 330 or the third power amplifier 340, and is otherwise open during other operational modes of the switch 300, e.g., during WLAN transmission, or WLAN/PAN reception. The second power amplifier 330 and third power amplifier 340 are both used for transmission of signals with a power level that is lower than the first power amplifier 320. The second power amplifier 330 may transmit with lower power than the third power amplifier 340. For example, the second and third power amplifiers 330 and 340 may be used for PAN signals, and are sometimes referred to herein as a PAN low (L) power amplifier 330 and PAN high (H) power amplifier 340.

The PAN low power amplifier 330 may be connected to the series switch SW1 through a PAN power amplifier matching network circuit 332 that includes a transformer 334 with inductors L3 and L4, with the secondary inductor L4 connected to the RFIO node 310, via the series switch SW1, and shunted to ground. The PAN high power amplifier 340 may be connected to the series switch SW1 through a capacitor 342. During transmission using the PAN high power amplifier 340, the shunt inductors L4 and L2, from the WLAN power amplifier matching network circuit 322, are used for output matching.

The switch 300 further includes a low noise amplifier 350 that is connected to the RFIO node 310 through a capacitor C1 and an LNA matching network circuit 352. The output terminal of the low noise amplifier 350 may be connected, e.g., to a transformer 360 to enable a differential output from a single output. The LNA matching network circuit 352 includes a transformer 354 that includes inductors L5 and L6, with a variable capacitor C2 connected between inductors L5 and L6 and between capacitor C1 and ground, and a switch SW2, e.g., MOSFET, connected between inductors L5 and L6. The switch SW1 is closed during WLAN transmission by WLAN power amplifier 320 or PAN transmission by either PAN low power amplifier 330 or PAN high power amplifier 340, and is open WLAN/PAN reception by low noise amplifier 350.

Thus, the RFIO node 310 is connected to a shunt capacitor array that includes capacitor C1 and variable capacitor C2. The variable capacitor C2 may be tuned based on the equivalent capacitor for C1 in series with C2 (i.e., ${C}_{eq} = \frac{1}{C 1 + C 2}$) for the various operational modes of the switch 300. For example, the variable capacitor C2 may be tuned to a maximum value so that the capacitor array (i.e., capacitor C1 in series with C2) serves as a power amplifier balun resonance shunt capacitor during WLAN transmission by WLAN power amplifier 320. The variable capacitor C2 may be tuned to specific levels so that the capacitor array (i.e., capacitor C1 in series with C2) is optimized for output matching during PAN transmission by either PAN low power amplifier 330 or PAN high power amplifier 332. The variable capacitor C2 may be turned off so that the capacitor array (i.e., capacitor C1) serves as an AC coupling capacitor during WLAN/PAN reception by low noise amplifier 350.

Thus, by configuring the switches SW1 and SW2 and the variable capacitor C2, the switch 300 may be configured for different operating modes. Table 1, for example, summarizes the various configurations of the switch 300 for different operational modes, including WLAN transmission (WLAN Tx), PAN transmission with high power (PAN H Tx), PAN transmission with low power (PAN L Tx), and WLAN/PAN reception (WLAN/PAN Rx). In Table 1, the C2 value MAX indicates the maximum capacitance, X1 and X2 are different values based on the PAN Tx matching, and 0 indicates no or minimal capacitance.

**TABLE 1**

| Control Name | Configuration | | | |
|---|---|---|---|---|
| | WLAN Tx | PAN H Tx (13dBM) | PAN L Tx (0dBM) | WLAN/PAN Rx |
| SW1 | Open | Short | Short | Open |
| SW2 | Short | Short | Short | Open |
| C2 | MAX | X1 | X2 | 0 |

FIG. 3B illustrates the switch 300 in the WLAN transmission mode. As illustrated, in FIG. 3B and indicated in Table 1, while in WLAN transmission mode, the inductor L2 shunted to ground provides ESD protection to the RFIO node 310. The switch SW1 is open, which protects the PAN power amplifiers 330 and 340. Additionally, the switch SW2 is closed (short) to protect the low noise amplifier 350. The variable capacitor C2 is set to its maximum capacitance to maximize the power attenuation from the WLAN power amplifier 320 during transmission, e.g., operating as a power amplifier balun resonance shunt capacitor.

FIG. 3C illustrates the switch 300 in the PAN H or PAN L transmission modes. As illustrated, in FIG. 3C and indicated in Table 1, while in the PAN transmission modes, the inductor L2 shunted to ground provides ESD protection to the RFIO node 310. The switch SW1 is closed to connect the PAN power amplifiers 330 and 340 to the RFIO node 310. The PAN low power amplifier 330 and PAN high power amplifier 340, thus, share the same output with good performance. Additionally, the inductors L3 and L4 protect the PAN low power amplifier 330 during transmission by the PAN high power amplifier 340. Similarly, the inductors L1 and L2 protect the WLAN power amplifier 320 during transmission by the PAN high power amplifier 340 (or the PAN low power amplifier 330). The switch SW2 is closed (short) to protect the low noise amplifier 350. The variable capacitor C2 is tuned to X1 or X2 to optimize the output matching for the PAN low power amplifier 330 and PAN high power amplifier 340 during transmission, e.g., operating as a matching shunt capacitor.

FIG. 3D illustrates the switch 300 in the WLAN or PAN reception mode. As illustrated, in FIG. 3D and indicated in Table 1, while in the WLAN or PAN reception mode, the inductor L2 shunted to ground provides ESD protection to the RFIO node 310. The switch SW2 is open, which isolates the PAN power amplifiers 330 and 340. The switch SW2 is open and the variable capacitor C2 is off so that the LNA input matching is based on inductor L2, capacitor C1, and inductors L5 and L6. Thus, the capacitor array operates as an AC coupling capacitor in WLAN or PAN reception mode.

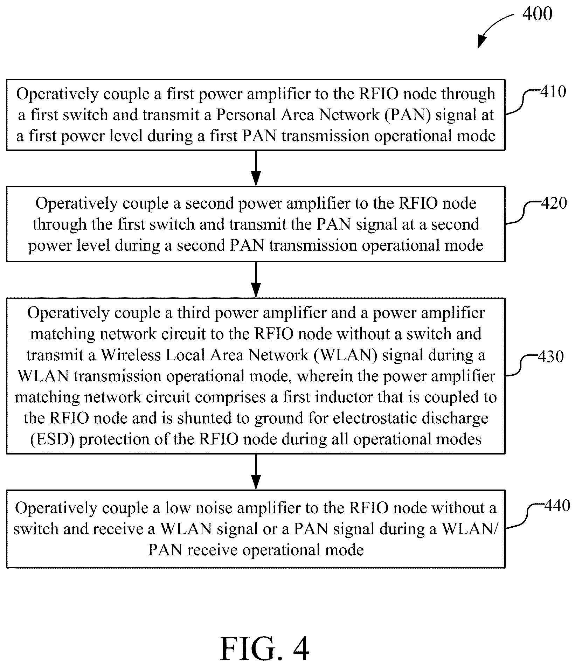

FIG. 4 is a flowchart illustrating one example of a method 400 of sharing a radio frequency input/output (RFIO) node in an integrated radio frequency switching circuit, according to some implementations. The integrated radio frequency switching circuit, for example, may be the switch 300 illustrated in FIGs. 3A, 3B, 3C, and 3D, which may be used in a front end module, such as used in front end architecture 200 illustrated in FIG. 2.

As illustrated in FIG. 4, a first power amplifier is operatively coupled to the RFIO node through a first switch and transmits a Personal Area Network (PAN) signal at a first power level during a first PAN transmission operational mode (510), e.g., as illustrated by power amplifier 330 and switch SW1 in FIG. 3C.

A second power amplifier is operatively coupled to the RFIO node through the first switch and transmits the PAN signal at a second power level during a second PAN transmission operational mode (520), e.g., as illustrated by power amplifier 340 and switch SW1 in FIG. 3C.

A third power amplifier and a power amplifier matching network circuit are operatively coupled to the RFIO node without a switch and transmit a Wireless Local Area Network (WLAN) signal during a WLAN transmission operational mode (530), e.g., as illustrated by power amplifier 320 and WLAN power amplifier matching network circuit 322 in FIG. 3B. Additionally, the power amplifier matching network circuit includes a first inductor that is coupled to the RFIO node and is shunted to ground for electrostatic discharge (ESD) protection of the RFIO node during all operational modes, e.g., as illustrated by inductor L2 and discussed in relation to FIGs. 3A-3D.

A low noise amplifier is operatively coupled to the RFIO node without a switch and receives a WLAN signal or a PAN signal during a WLAN/PAN receive operational mode (540), e.g., as illustrated by low noise amplifier 350 in FIG. 3D.

In some implementations, the low noise amplifier is operatively coupled to the RFIO node through a low noise amplifier matching network circuit that includes a capacitor array with a first capacitor coupled to the RFIO node and a variable capacitor coupled between the first capacitor and ground, e.g., as illustrated by capacitors C1 and C2 in FIG. 3A. The method may further include tuning the variable capacitor to attenuate power to the low noise amplifier during the first PAN transmission operational mode, the second PAN transmission operational mode, and the WLAN transmission operational mode, and the variable capacitor may be off during the WLAN/PAN receive operational mode, e.g., as discussed in relation to FIGs. 3A-3D and Table 1.

In some implementations, the capacitor array may serve as a power amplifier balun resonance shunt capacitor during the WLAN transmission operational mode, e.g., as discussed in relation to FIGs. 3A and 3B.

In some implementations, the capacitor array may serve as a matching shunt capacitor during the first PAN transmission operational mode and the second PAN transmission operational mode, e.g., as discussed in relation to FIGs. 3A and 3C.

In some implementations, the capacitor array may serve as an alternating current coupling capacitor during the WLAN/PAN receive operational mode, e.g., as discussed in relation to FIGs. 3A and 3D.

In some implementations, the low noise amplifier matching network circuit may further include a second switch, which may be disposed between two inductors, e.g., as illustrated by switch SW2 in FIG. 3A. The method may further include closing the second switch to protect the low noise amplifier during the first PAN transmission operational mode, the second PAN transmission operational mode, and the WLAN transmission operational mode, e.g., as discussed in relation to FIGs. 3A, 3B, and 3C. The method may further include opening the switch during the WLAN/PAN receive operational mode, e.g., as discussed in relation to FIGs. 3A and 3D, and Table 1.

In some implementations, the method may include closing the first switch to operatively couple the first power amplifier and the second power amplifier to the RFIO node during the first PAN transmission operational mode and the second PAN transmission operational mode, and opening the first switch to protect the first power amplifier and the second power amplifier during the WLAN transmission operational mode and the WLAN/PAN receive operational mode, e.g., as discussed in relation to switch SW1 in FIGs. 3A, 3B, 3C, and 3D, and Table 1.

In some implementations, the first power amplifier may be operatively coupled to the RFIO node through a PAN power amplifier matching network circuit that includes a second inductor that is coupled to the second power amplifier and the first switch and is shunted to ground to protect the first power amplifier during the second PAN transmission operational mode, e.g., as discussed in relation to inductor L4 in FIGs. 3A and 3C.

Those of skill in the art will appreciate that information and signals may be represented using any of a variety of different technologies and techniques. For example, data, instructions, commands, information, signals, bits, symbols, and chips that may be referenced throughout the above description may be represented by voltages, currents, electromagnetic waves, magnetic fields or particles, optical fields or particles, or any combination thereof.

Further, those of skill in the art will appreciate that the various illustrative logical blocks, modules, circuits, and algorithm steps described in connection with the aspects disclosed herein may be implemented as electronic hardware, computer software, or combinations of both. To clearly illustrate this interchangeability of hardware and software, various illustrative components, blocks, modules, circuits, and steps have been described above generally in terms of their functionality. Whether such functionality is implemented as hardware or software depends upon the particular application and design constraints imposed on the overall system. Skilled artisans may implement the described functionality in varying ways for each particular application, but such implementation decisions should not be interpreted as causing a departure from the scope of the disclosure.

The various illustrative logical blocks, modules, and circuits described in connection with the embodiments disclosed herein may be implemented or performed with a general purpose processor, a Digital Signal Processor (DSP), an Application Specific Integrated Circuit (ASIC), a Field Programmable Gate Array (FPGA) or other programmable logic device, discrete gate or transistor logic, discrete hardware components, or any combination thereof designed to perform the functions described herein. A general purpose processor may be a microprocessor, but in the alternative, the processor may be any conventional processor, controller, microcontroller, or state machine. A processor may also be implemented as a combination of computing devices, e.g., a combination of a DSP and a microprocessor, a plurality of microprocessors, one or more microprocessors in conjunction with a DSP core, or any other such configuration.

The methods, sequences or algorithms described in connection with the aspects disclosed herein may be embodied directly in hardware, in a software module executed by a processor, or in a combination of the two. A software module may reside in RAM memory, flash memory, ROM memory, EPROM memory, EEPROM memory, registers, hard disk, a removable disk, a CD-ROM, or any other form of storage medium known in the art. An exemplary storage medium is coupled to the processor such that the processor can read information from, and write information to, the storage medium. In the alternative, the storage medium may be integral to the processor.

In the foregoing specification, embodiments have been described with reference to specific examples thereof. It will, however, be evident that various modifications and changes may be made thereto without departing from the broader scope of the disclosure as set forth in the appended claims. The specification and drawings are, accordingly, to be regarded in an illustrative sense rather than a restrictive sense.

## Claims

1. An integrated radio frequency switching circuit, comprising:
a radio frequency input/output (RFIO) node;
a first power amplifier for transmitting a Personal Area Network (PAN) signal at a first power level;
a second power amplifier for transmitting the PAN signal at a second power level, wherein both the first power amplifier and the second power amplifier are operatively coupled to the RFIO node through a first switch;
a third power amplifier for transmitting a Wireless Local Area Network (WLAN) signal and a WLAN power amplifier matching network circuit operatively coupled to the RFIO node without a switch, wherein the WLAN power amplifier matching network circuit comprises a first inductor that is coupled to the RFIO node and is shunted to ground for electrostatic discharge (ESD) protection of the RFIO node; and
a low noise amplifier for receiving a WLAN signal and a PAN signal operatively coupled to the RFIO node.

2. The integrated radio frequency switching circuit of claim 1, wherein the low noise amplifier is operatively coupled to the RFIO node through a low noise amplifier matching network circuit, the low noise amplifier matching network circuit comprises a capacitor array comprising a first capacitor coupled to the RFIO node and a variable capacitor coupled between the first capacitor and ground and that is tunable to attenuate power to the low noise amplifier during transmission of the WLAN signal by the third power amplifier and during transmission of the PAN signal at the first power level by the first power amplifier and during transmission of the PAN signal at the second power level by the second power amplifier, and is off during reception of the WLAN signal by the low noise amplifier and during reception of the PAN signal by the low noise amplifier.

3. The integrated radio frequency switching circuit of claim 2, wherein the capacitor array serves as a power amplifier balun resonance shunt capacitor during the transmission of the WLAN signal by the third power amplifier.

4. The integrated radio frequency switching circuit of claim 2,
wherein the capacitor array serves as a matching shunt capacitor during the transmission of the PAN signal at the first power level by the first power amplifier and during the transmission of the PAN signal at the second power level by the second power amplifier; or
wherein the capacitor array serves as an alternating current coupling capacitor during the reception of the WLAN signal by the low noise amplifier and during the reception of the PAN signal by the low noise amplifier.

5. The integrated radio frequency switching circuit of claim 2,
wherein the low noise amplifier matching network circuit further comprises a second switch that is closed to protect the low noise amplifier during transmission of the PAN signal at the first power level by the first power amplifier, during transmission of the PAN signal at the second power level by the second power amplifier, and during transmission of the WLAN signal by the third power amplifier;
wherein, optionally, the second switch is open to during reception of the WLAN signal by the low noise amplifier and during reception of the PAN signal by the low noise amplifier.

6. The integrated radio frequency switching circuit of claim 1,
wherein the first switch is closed during transmission of the PAN signal at the first power level by the first power amplifier and during transmission of the PAN signal at the second power level by the second power amplifier, and the first switch is open during transmission of the WLAN signal by the third power amplifier, during reception of the WLAN signal by the low noise amplifier, and during reception of the PAN signal by the low noise amplifier.

7. The integrated radio frequency switching circuit of claim 1,
wherein the first power amplifier is operatively coupled to the RFIO node through a PAN power amplifier matching network circuit, wherein the PAN power amplifier matching network circuit comprises a second inductor that is coupled to the second power amplifier and the first switch and is shunted to ground.

8. A method of sharing a radio frequency input/output (RFIO) node in an integrated radio frequency switching circuit, comprising:
operatively coupling a first power amplifier to the RFIO node through a first switch and transmitting a Personal Area Network (PAN) signal at a first power level during a first PAN transmission operational mode;
operatively coupling a second power amplifier to the RFIO node through the first switch and transmitting the PAN signal at a second power level during a second PAN transmission operational mode;
operatively coupling a third power amplifier and a power amplifier matching network circuit to the RFIO node without a switch and transmitting a Wireless Local Area Network (WLAN) signal during a WLAN transmission operational mode, wherein the power amplifier matching network circuit comprises a first inductor that is coupled to the RFIO node and is shunted to ground for electrostatic discharge (ESD) protection of the RFIO node during all operational modes; and
operatively coupling a low noise amplifier to the RFIO node without a switch and receiving a WLAN signal or a PAN signal during a WLAN/PAN receive operational mode.

9. The method of claim 8, wherein the low noise amplifier is operatively coupled to the RFIO node through a low noise amplifier matching network circuit, the low noise amplifier matching network circuit comprises a capacitor array comprising a first capacitor coupled to the RFIO node and a variable capacitor coupled between the first capacitor and ground, the method further comprising tuning the variable capacitor to attenuate power to the low noise amplifier during the first PAN transmission operational mode, the second PAN transmission operational mode, and the WLAN transmission operational mode, and tuning the variable capacitor to off during the WLAN/PAN receive operational mode.

10. The method of claim 9, wherein the capacitor array serves as a power amplifier balun resonance shunt capacitor during the WLAN transmission operational mode; or
wherein the capacitor array serves as a matching shunt capacitor during the first PAN transmission operational mode and the second PAN transmission operational mode; or
wherein the capacitor array serves as an alternating current coupling capacitor during the WLAN/PAN receive operational mode.

11. The method of claim 9, wherein the low noise amplifier matching network circuit further comprises a second switch, the method further comprising closing the second switch to protect the low noise amplifier during the first PAN transmission operational mode, the second PAN transmission operational mode, and the WLAN transmission operational mode;
wherein, optionally, the method further comprises opening the switch during the WLAN/PAN receive operational mode.

12. The method of claim 8, further comprising closing the first switch to operatively couple the first power amplifier and the second power amplifier to the RFIO node during the first PAN transmission operational mode and the second PAN transmission operational mode, and opening the first switch to protect the first power amplifier and the second power amplifier during the WLAN transmission operational mode and the WLAN/PAN receive operational mode.

13. The method of claim 8, wherein the first power amplifier is operatively coupled to the RFIO node through a PAN power amplifier matching network circuit, wherein the PAN power amplifier matching network circuit comprises a second inductor that is coupled to the second power amplifier and the first switch and is shunted to ground to protect the first power amplifier during the second PAN transmission operational mode.

14. An integrated radio frequency switching circuit, comprising:
a radio frequency input/output (RFIO) node that is configured to be operatively coupled to a first Personal Area Network (PAN) transmission path, a second PAN transmission path, a Wireless Local Area Network (WLAN) transmission path, and a WLAN and PAN reception path;
a first power amplifier for transmitting a PAN signal at a first power level along the first PAN transmission path during a first PAN transmission operational mode;
a second power amplifier for transmitting the PAN signal at a second power level along the second PAN transmission path during a second PAN transmission operational mode;
a first switch coupled between both the first power amplifier and the second power amplifier and the RFIO node, the first switch is controlled to operatively couple both the first power amplifier and the second power amplifier to the RFIO node during the first PAN transmission operational mode and the second PAN transmission operational mode;
a third power amplifier for transmitting a Wireless Local Area Network (WLAN) signal along the WLAN transmission path during a WLAN transmission operational mode;
a WLAN power amplifier matching network circuit coupled between the third power amplifier and the RFIO node along the WLAN transmission path, wherein the third power amplifier and WLAN power amplifier matching network circuit are operatively coupled to the RFIO node without a switch, wherein the WLAN power amplifier matching network circuit comprises a first inductor that is coupled to the RFIO node and is shunted to ground for electrostatic discharge (ESD) protection of the RFIO node during all operational modes; and
a low noise amplifier operatively coupled to the RFIO node for receiving a WLAN signal or a PAN signal along the WLAN and PAN reception path during a WLAN/PAN receive operational mode.

15. The integrated radio frequency switching circuit of claim 14,
wherein the low noise amplifier is operatively coupled to the RFIO node through a low noise amplifier matching network circuit comprising a capacitor array with a first capacitor coupled to the RFIO node and a variable capacitor coupled between the first capacitor and ground, wherein the variable capacitor is tuned to attenuate power to the low noise amplifier during the first PAN transmission operational mode, the second PAN transmission operational mode, and the WLAN transmission operational mode, and is off during the WLAN/PAN receive operational mode.
